# EUROPEAN PATENT SPECIFICATION

(11) **EP 4 131 475 B1**
(45) Date of publication and mention of the grant of the patent: **06.05.2026**
(21) Application number: 21868493.4
(22) Date of filing: 06.09.2021
(51) Int. Cl.: H01M 4/133, H01M 4/36, H01M 4/1393, H01M 4/587, H01M 4/04, H01M 4/38, H01M 4/134, H01M 4/48, H01M 4/1395, H01M 4/02

(54) **ELECTRODE FOR RECHARGEABLE LITHIUM BATTERY AND RECHARGEABLE LITHIUM BATTERY INCLUDING THE SAME**
ELEKTRODE FÜR EINE WIEDERAUFLADBARE LITHIUMBATTERIE UND WIEDERAUFLADBARE LITHIUMBATTERIE DAMIT
ÉLECTRODE POUR BATTERIE AU LITHIUM RECHARGEABLE ET BATTERIE AU LITHIUM RECHARGEABLE LA COMPRENANT

(30) Priority: 21.09.2020 CN 202010995090
(43) Date of publication of application: 08.02.2023
(73) Proprietor: Zhuhai CosMX Battery Co., Ltd., Zhuhai, Guangdong 519180 (CN)
(72) Inventor: HE, Wei, Zhuhai, Guangdong 519180 (CN); PENG, Chong, Zhuhai, Guangdong 519180 (CN); CHEN, Bo, Zhuhai, Guangdong 519180 (CN); LI, Junyi, Zhuhai, Guangdong 519180 (CN); XU, Yanming, Zhuhai, Guangdong 519180 (CN)
(74) Representative: Gill Jennings & Every LLP
(86) International application number: PCT/CN2021/116767
(87) International publication number: WO 2022/057668

(56) References cited:
- EP-A1- 3 780 169
- EP-A1- 4 037 015
- EP-A1- 4 266 397
- WO-A1-2019/187537
- CN-A- 101 047 235
- CN-A- 104 126 242
- CN-A- 110 660 965
- CN-A- 111 430 673
- CN-A- 112 018 327
- KR-A- 20190 090 497
- US-A1- 2016 285 101
- US-A1- 2019 305 308

## Description

### TECHNICAL FIELD

The present application relates to a technical field of battery, and specifically to a negative electrode sheet, a fabricating method thereof, and a battery containing the negative electrode sheet.

### BACKGROUND

Lithium batteries are widely used in consumer electronic products such as mobile phones and notebooks, as well as in products such as electric vehicles and electric power tools.

US2019305308A1 discloses a multilayer negative electrode comprising a negative electrode current collector configured to transfer electrons between an outer lead and a negative electrode active material, a first negative electrode mixture layer formed on one surface or both surfaces of the current collector and containing natural graphite as a negative electrode active material and a second negative electrode mixture layer formed on the first negative electrode mixture layer and containing artificial graphite as a negative electrode active material, and a lithium secondary hattery including the same.

WO2019187537A1 discloses a nonaqueous electrolyte secondary battery, where a negative electrode mixture layer has a first layer and a second layer formed in that order from the side of a negative electrode current collector. The first layer includes a first carbon-base active material with a 10% proof stress of less than or equal to 3 MPa, and a silicon-base active material containing Si. The second layer contains a second carbon-base active material with a 10% proof stress of greater than or equal to 5 MPa, and has a lower content ratio (mass ratio) of the silicon-base active material than the first layer.

EP4037015A1 discloses a negative electrode which is provided with a negative electrode current collector, and a negative electrode mixture layer formed on the negative electrode current collector, where the negative electrode mixture layer comprises a first layer arranged on the negative electrode current collector, and a second layer arranged on the first layer; the second layer includes graphite particles A having a particle internal porosity of at most 10%: the first layer includes graphite particles B having a particle in- ternal porosity of more than 10%; and the second layer has a water contact angle of at most 50°.

During the use of lithium batteries, the property of the negative electrode sheet has an important influence on the battery performance. Due to the problems such as short cycle life, expansion during cycling, and low capacity existing in the negative electrode material, it is difficult for the battery to meet the needs because of its low volumetric energy density and short cycle life.

### SUMMARY

In view of this, the present application provides a negative electrode sheet, a fabricating method, and a battery, thereby solving the problems of short cycle life and low capacity of negative electrode materials, which result in a battery with low volumetric energy density and short cycle life. The invention is set out in the appended set of claims.

To solve the above technical problems, the following solutions are provided in the present application:
In a first aspect, a negative electrode sheet according to an embodiment of the present application includes:
a current collector;
a first active layer provided on a surface of at least one side of the current collector; and
a second active layer provided on a surface of a side of the first active layer away from the current collector,
where, the first active layer is different from the second active layer, the first active layer includes a first active material including a first graphite, and the second active layer includes a second active material including a second graphite; and
a ratio of capacity per unit mass of the first active material to specific surface area of the first active material is a first capacity ratio, and the ratio of a capacity per unit mass of the second active material to a specific surface area of the second active material is a second capacity ratio, the ratio of the second capacity ratio to the first capacity ratio being greater than 1.

Where, the ratio of the second capacity ratio to the first capacity ratio is in the range of 1.05-1.5.

Where, the first active material further includes a first silicon material; and/or,
the second active material further includes a second silicon material.

Where, a specific surface area of the first graphite is in the range of 1.0 m²/g-1.8 m²/g, and a specific surface area of the second graphite is in the range of 1.0 m²/g-1.8 m²/g.

Where, the first graphite has the same capacity per gram as that of the second graphite, and the first graphite has a specific surface area different from that of the second graphite; and/or,
the first active material further includes a first silicon material, and the second active material further includes a second silicon material, the first silicon material having the same capacity per gram as that of the second silicon material, and the first silicon material having a specific surface area different from that of the second silicon material.

Where, the first active material further includes a first silicon material, and the second active material further includes a second silicon material, the first silicon material accounting for 5%-40% of the first active material by mass, and the second silicon material accounting for 5%-40% of the second active material by mass.

Where, the first active material further includes a first silicon material, and the second active material further includes a second silicon material, the first silicon material having a specific surface area of 1.1 m²/g-4.0 m²/g, and the second silicon material having a specific surface area of 1.1 m²/g-4.0 m²/g.

Where, the first active layer includes a first conductive agent, and the second active layer includes a second conductive agent; and/or,
the first active layer includes a first adhesive, and the second active layer includes a second adhesive.

In a second aspect, a method of fabricating a negative electrode sheet according to an embodiment of the present application, includes:
providing a current collector;
forming, on a surface of at least one side of the current collector, a first active layer;
forming, on a surface of a side of the first active layer away from the current collector, a second active layer;
where, the first active layer is different from the second active layer, the first active layer includes a first active material including a first graphite, and the second active layer includes a second active material including a second graphite; a ratio of capacity per unit mass of the first active material to specific surface area of the first active material is a first capacity ratio, and a ratio of capacity per unit mass of the second active material to specific surface area of the second active material is a second capacity ratio, a ratio of the second capacity ratio to the first capacity ratio being greater than 1.

In a third aspect, a battery according to an embodiment of the present application includes the negative electrode sheet as described in the above embodiments.

The beneficial effects of the above-mentioned technical solutions of the present application are as follows.

According to a negative electrode sheet of an embodiment of the present application, a first active layer is provided on a surface of at least one side of the current collector, a second active layer is provided on a surface of a side of the first active layer away from the current collector, the first active layer is different from the second active layer, the first active layer includes a first active material including a first graphite, and the second active layer includes a second active material including a second graphite; a ratio of capacity per unit mass of the first active material to specific surface area of the first active material is a first capacity ratio, and a ratio of capacity per unit mass of the second active material to specific surface area of the second active material is a second capacity ratio, the ratio of the second capacity ratio to the first capacity ratio being greater than 1. In the negative electrode sheet of the present application, different composite active layers are coated on the current collector, the first active layer is provided on a surface of at least one side of the current collector, the second active layer is provided on a surface of a side of the first active layer away from the current collector, and the ratio of the second capacity ratio for the second active material to the first capacity ratio for the first active material is greater than 1, which improves the cycle life of the negative electrode material, reduces the expansion ratio of negative electrode material, increases the capacity of the negative electrode sheet, increases the volumetric energy density of the battery, prolongs the cycle life of the battery, and meets the requirements for high energy.

### BRIEF DESCRIPTION OF THE DRAWINGS

FIG. 1 is a schematic structural diagram of a negative electrode sheet according to an embodiment of the present application.
FIG. 2 is another schematic structural diagram of a negative electrode sheet according to an embodiment of the present application.

Reference numbers:
Current collector 10; First active layer 11; Second active layer 12.

### DETAILED DESCRIPTION OF THE EMBODIMENTS

To make the objectives, technical solutions, and advantages of embodiments of the present application clearer, the following will clearly and comprehensively describe the technical solutions in embodiments of the present application with reference to the accompanying drawings in embodiments of the present application. Apparently, the described embodiments are merely a part rather than all embodiments of the present application. All other embodiments obtained by those of ordinary skill in the art based on the described embodiments of the present application fall within the protection scope of the present application.

The following specifically describes the negative electrode sheet according to embodiments of the present application.

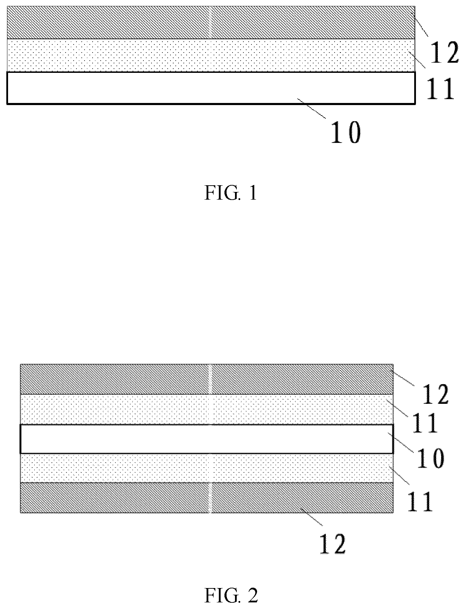

As shown in FIG. 1 and FIG. 2, the negative electrode sheet of the embodiment of the present application includes a current collector 10, a first active layer 11 is provided on a surface of at least one side of the current collector 10, and a second active layer 12 is provided on a surface of a side of the first active layer 11 away from the current collector 10, the first active layer 11 being different from the second active layer 12. The first active layer 11 contains a first active material including a first graphite, and the second active layer 12 contains a second active material including a second graphite. The ratio of capacity per unit mass of the first active material to specific surface area of the first active material is a first capacity ratio, and the ratio of capacity per unit mass of the second active material to specific surface area of the second active material is a second capacity ratio, the ratio of the second capacity ratio to the first capacity ratio being greater than 1.

That is, the negative electrode sheet of the embodiment of the present application includes a current collector 10, where, the current collector may be copper foil and have a thickness of 8 µm. The first active layer 11 is provided on the surface of one or two sides of the current collector 10, and the second active layer 12 is provided on the surface of a side of the first active layer 11 away from the current collector 10. The first active layer 11 is different from the second active layer 12. The first active layer 11 contains a first active material, and the first active material includes a first graphite. The second active layer 12 contains a second active material, and the second active material includes a second graphite. The first graphite and the second graphite may be the same or different. For example, the particle size or specific surface area of the first graphite is different from that of the second graphite, both the first graphite and the second graphite may have a capacity per gram of 355 mAh/g; and the first graphite may have a specific surface area of 1.75 m²/g and the second graphite may have a specific surface area of 1.36 m²/g. The coating areal density of the first active layer 11 and the second active layer 12 may be the same or different, and the ratio of the coating areal density of the second active layer 12 to that of the first active layer 11 may be in the range of 0.25-4. The ratio of the capacity per unit mass of the first active material to the specific surface area of the first active material is the first capacity ratio, and the ratio of the capacity per unit mass of the second active material to the specific surface area of the second active material is the second capacity ratio. The ratio of the second capacity ratio to the first capacity ratio is greater than 1. In the negative electrode sheet of the present application, the current collector 10 is coated with different active layers. The first active layer 11 is provided on the surface of at least one side of the current collector 10, and the second active layer 12 is provided on the surface of a side of the first active layer 11 away from the current collector 10. If the ratio of the second capacity ratio to the first capacity ratio is greater than 1, it is possible to improve the cycle life of the negative electrode material, reduce the expansion ratio of the negative electrode material, increase the capacity of the negative electrode sheet and the volumetric energy density of the battery, prolong the cycle life of the battery, and meet the requirements for high energy.

In some embodiments, the ratio of the second capacity ratio to the first capacity ratio may be in the range of 1.05-1.5, which effectively increases the cycle life of the negative electrode material and increase the capacity of the negative electrode sheet, thereby facilitating to improve the volumetric energy density of the battery and prolong its cycle life.

In an embodiment of the present application, the first active material includes a first silicon material; and/or,
the second active material includes a second silicon material. Where, the first silicon material and the second silicon material may be the same or different. Each of the first silicon material and the second silicon material may be silicon-based material, for example, the first silicon material and the second silicon material may each include at least one of SiO, SiC, and SiN. The first silicon material may account for 5%-20% of the first active material by mass, and the second silicon material may account for 5%-20% of the second active material, which may be selected depending on specific needs. Graphite and silicon material are included in the active layer, which can not only prevent the problems of the short cycle life and high cyclic expansion ratio existing in silicon-based negative electrode material, but also effectively improve the cycle performance of silicon-doped negative electrode material, increase its energy density, facilitate to increase the capacity of battery and prolong the cycle life of battery.

Optionally, the first graphite and the second graphite may be the same or different. For example, the specific surface area of the first graphite is in the range of 1.0 m²/g-1.8 m²/g, and the specific surface area of the second graphite is in the range of 1.0 m²/g-1.8 m²/g.

Optionally, the capacity per gram of the first graphite is the same as that of the second graphite, and the specific surface area of the first graphite is different from that of the second graphite; and/or, the first active material includes a first silicon material, and the second active material includes a second silicon material, the capacity per gram of the first silicon material is the same as that of the second silicon material, and the specific surface area of the first silicon material is different from that of the second silicon material. For example, the capacity per gram of the first graphite is the same as that of the second graphite, and both of them may have a capacity per gram of 355 mAh/g. The specific surface area of the first graphite is different from that of the second graphite, the specific surface area of the first graphite may be 1.4 m²/g and the specific surface area of the second graphite may be 1.2 m²/g.

The first active material includes a first silicon material, and the second active material includes a second silicon material. The first silicon material is different from the second silicon material. For example, the first silicon material may be SiO, and the second silicon material may be SiN. The capacity per gram of the first silicon material may be the same as that of the second silicon material, and the specific surface area of the first silicon material may be different from that of the second silicon material. For example, both the first silicon material and the second silicon material may have a capacity per gram of 1360 mAh/g, the specific surface area of the first silicon material may be 1.80 m²/g, and the specific surface area of the second silicon material may be 2.01 m²/g, which is beneficial to prevent cyclic expansion of the negative electrode material and effectively increase energy density of the battery.

In some embodiments, the first active material further includes a first silicon material, and the second active material further includes a second silicon material. The first silicon material accounts for 5%-40% of the first active material by mass, for example, the first silicon material accounts for 5%-20% of the first active material by mass. The second silicon material accounts for 5%-40% of the second active material by mass, for example, the second silicon material accounts for 5%-20% of the second active material by mass. The specific ratio may be selected according to actual needs.

In other embodiments, the first active material further includes a first silicon material, and the second active material further includes a second silicon material, where, the specific surface area of the first silicon material is in the range of 1.1 m²/g-4.0 m²/g, and the specific surface area of the second silicon material is 1.1 m²/g-4.0 m²/g, which may be selected according to actual needs.

In an embodiment of the present application, the coating areal density of the first active layer 11 may be same as that of the second active layer 12, the mass fraction of the first silicon material in the first active layer 11 is X1%, the mass fraction of the second silicon material in the second active layer 12 is X2%, the specific surface area of the first silicon material is b1, the specific surface area of the second silicon material is b2, the capacity per gram of the first silicon material is d1, and the capacity per gram of the second silicon material is d2; the specific surface area of the first graphite in the first active layer 11 is a1, the specific surface area of the second graphite in the second active layer 12 is a2, the capacity per gram of the first graphite is c1, and the capacity per gram of the second graphite is c2; the capacity per unit mass of the active layer 11 is c1*(1-X1%)+ d1*X1% mAh/g, and the capacity per unit mass of the second active layer 12 is c2*(1- X2%)+ d2*X2% mAh/g; the ratio of the capacity per unit mass of the first active layer 11 to the specific surface area of the first active layer 11 is referred to as a first capacity ratio Y1, and the ratio of the capacity per unit mass of the second active layer 12 to the specific surface area of the second active layer 12 is referred to as a second capacity ratio Y2, where, Y1=[ c1*(1- X1%)+ d1*X1% ]/[ a1*(1- X1%)+ b1*X1%], Y2=[ c2*(1- X2%)+ d2*X2% ]/[ a2*(1- X2%)+ b2*X2%], Y2/Y1 being greater than 1, Y2/Y1 being preferably 1.05-1.5.

Specifically, the first active layer 11 contains a first conductive agent, and the second active layer 12 contains a second conductive agent; and/or, the first active layer 11 contains a first adhesive, and the second active layer 12 contains a second adhesive. Where, the first conductive agent and the second conductive agent may include at least one of conductive carbon black, carbon nanotube, carbon black, and carbon fiber, respectively, the first conductive agent and the second conductive agent may have a particle size of 0.01-50 µm, and the type and particle size of the conductive agent may be selected reasonably according to actual needs. The first adhesive and the second adhesive may each include one or more of high molecular polymers such as polyvinylidene fluoride (PVDF), polytetrafluoroethylene (PTFE), polyethyleneimine (PEI), polyaniline (PAN), polyacrylic acid (PAA), sodium alginate, styrene butadiene rubber (SBR), carboxymethyl cellulose (CMC), phenolic resin or epoxy resin, etc.

The embodiment of the present application provides a method for fabricating a negative electrode sheet, and the method for fabricating the negative electrode sheet includes:
providing a current collector 10;
forming, on a surface of at least one side of the current collector 10, a first active layer 11;
forming, on a surface of a side of the first active layer 11 away from the current collector 10, a second active layer 12, thereby obtaining the negative electrode sheet;
where, the first active layer 11 is different from the second active layer 12, the first active layer 11 contains a first active material including a first graphite, and the second active layer 12 contains a second active material including a second graphite; the ratio of capacity per unit mass of the first active material to specific surface area of the first active material is the first capacity ratio, and the ratio of capacity per unit mass of the second active material to specific surface area of the second active material is the second capacity ratio, the ratio of the second capacity ratio to the first capacity ratio being greater than 1. In the negative electrode sheet of the present application, the current collector is coated with different active layers. The first active layer 11 is formed on the surface of at least one side of the current collector 10, and the second active layer 12 is formed on the surface of a side of the first active layer 11 away from the current collector 10. If the ratio of the second capacity ratio of the second active material to the first capacity ratio of the first active material is greater than 1, it is possible to improve the cycle life of the negative electrode material, reduce the expansion ratio, increase the capacity of the negative electrode sheet and the volumetric energy density of the battery, and meet the needs for high energy.

In some embodiments, the ratio of the second capacity ratio to the first capacity ratio is in the range of 1.05-1.5.

In other embodiments, the first active material includes a first silicon material; and/or,
the second active material includes a second silicon material.

Specifically, the first graphite is different from the second graphite. The specific surface area of the first graphite is in the range of 1.0 m²/g-1.8 m²/g, and the specific surface area of the second graphite is in the range of 1.0 m²/g-1.8 m²/g.

Where, the capacity per gram of the first graphite is the same as that of the second graphite, and the specific surface area of the first graphite is different from that of the second graphite; and/or,
the first active material further includes a first silicon material, the second active material further includes a second silicon material, the gram capacity of the first silicon material is the same as that of the second silicon material, and the specific surface area of the first silicon material is different from that of the second silicon material.

Optionally, the first active material includes a first silicon material, and the second active material includes a second silicon material, the first silicon material being different from the second silicon material. For example, the capacity per gram of the first silicon material is the same as that of the second silicon material, and the specific surface area of the first silicon material is different from that of the second silicon material.

The first active material further includes a first silicon material, and the second active material further includes a second silicon material. The first silicon material accounts for 5%-40% of the first active material by mass, and the second silicon material accounts for 5%-40% of the second active material by mass. The first active material further includes a first silicon material, and the second active material further includes a second silicon material, where, the specific surface area of the first silicon material is in the range of 1.1 m²/g - 4.0 m²/g, and the specific surface area of the second silicon material is in the range of 1.1 m²/g - 4.0 m²/g.

In the embodiment of the present application, the first active layer 11 includes a first conductive agent, and the second active layer 12 includes a second conductive agent; and/or, the first active layer 11 includes a first adhesive, and the second active layer 12 includes a second adhesive.

An embodiment of the present application provides a battery, which may be a lithium ion battery; and the battery includes the negative electrode sheet described in the above embodiments. The battery with the negative electrode sheet in the above embodiments has a long cycle life and a high volumetric energy density, and may meet the requirements for high energy.

The present application will be further illustrated below through some specific examples.

### Example 1

### Fabrication of a positive electrode sheet

Lithium cobalt oxide (LiCoO₂) as positive active material, carbon black as conductive agent, polyvinylidene fluoride (PVDF) as adhesive and N-methylpyrrolidone (NMP) as solvent were uniformly mixed at a weight ratio of 96: 2.5: 1.5: 80 to obtain positive electrode slurry to be coated.

The positive electrode slurry was uniformly coated on an aluminum foil current collector with a thickness of 13 µm, and subjected to dry treatment after the coating was finished, to obtain the positive electrode sheet to be rolled.

### Fabrication of a negative electrode sheet

Fabrication of a first slurry: a first graphite as negative active material, a first silicon material, a conductive agent, carboxymethyl cellulose (CMC) and styrene butadiene rubber (SBR) as adhesive, and deionized water were added to a mixer at a certain mass ratio according to certain steps, subjected to mixing and stirring, and dispersed uniformly, to obtain the first slurry to be coated, where, the first graphite accounted for 90% of the total of the first graphite and the first silicon material by mass, and the first silicon material accounted for 10% of the total of the first graphite and the first silicon material by mass. The capacity per gram of the first graphite was 355 mAh/g, the specific surface area of the first graphite was 1.4 m²/g, the first silicon material was SiO, the capacity per gram of the first silicon material was 1360mAh/g, and the specific surface area of the first silicon material was 1.95 m²/g.

Fabrication of a second slurry: a second graphite as negative active material, a second silicon material, a conductive agent, carboxymethyl cellulose (CMC) and styrene butadiene rubber (SBR) as adhesive and deionized water were added to a mixer at a certain mass ratio according to certain steps, subjected to mixing and stirring, and dispersed uniformly, to obtain the second slurry to be coated, where, the second graphite accounted for 90% of the total of the second graphite and the second silicon material by mass, and the second silicon material accounted for 10% of the total of the second graphite and the second silicon material by mass. The capacity per gram of the second graphite was 355 mAh/g, the specific surface area of the second graphite was 1.2 m²/g, the second silicon material was SiO, the capacity per gram of the second silicon material was 1360 mAh/g, and the specific surface area of the second silicon material was 1.95 m²/g.

A double-layer coater was applied to perform coating, where, the first slurry was coated uniformly on a copper foil current collector with a thickness of 8 µm to form a first slurry layer, and then a second slurry was coated on the first slurry layer, the coating areal density of the first slurry layer being the same as that of the second slurry layer. After the coating was finished, the coated copper foil current collector was subjected to drying treatment to obtain the negative electrode sheet to be rolled

Fabrication of finished battery: the resulting coated and dried positive and negative electrode sheets were subjected to the following steps of rolling, cutting, making sheet, winding, packaging, baking, infusing, performing formation, etc. to obtain the finished battery.

### Examples 2-5 and comparative example 1

The fabrication of the positive electrode sheet and of the finished battery in examples 2-5 and comparative example 1 was the same as that in example 1.

The fabrication of the negative electrode sheet in examples 2-5 and comparative example 1 was the same as that in embodiment 1, except for the specific surface areas of the graphite and silicon material in the active layers. The details were shown in Table 1 below.

**Table 1 Specific surface areas of graphite and silicon material in examples 1-5 and comparative example 1**

| Description | Active layer | Specific surface area of graphite (m²/g) | Specific surface area of silicon material (m² /g) | Y2/Y1 |
|---|---|---|---|---|
| Example 1 | First active layer | 1.4 | 1.95 | 1.14 |
| | Second active layer | 1.2 | 1.95 | |
| Example 2 | First active layer | 1.4 | 1.95 | 1.33 |
| | Second active layer | 1.0 | 1.95 | |
| Example 3 | First active layer | 1.4 | 1.95 | 1.18 |
| | Second active layer | 1.2 | 1.5 | |
| Example 4 | First active layer | 1.4 | 1.95 | 1.22 |
| | Second active layer | 1.2 | 1.1 | |
| Example 5 | First active layer | 1.4 | 1.95 | 1.09 |
| | Second active layer | 1.2 | 2.5 | |
| Comparative example 1 | First active layer | 1.4 | 1.95 | 0.8 |
| | Second active layer | 1.8 | 1.95 | |

### Examples 6-8 and comparative examples 2-3

The fabrication of the positive electrode sheet and the finished battery in examples 6-8 and comparative examples 2-3 was the same as that in example 1.

The fabrication of the negative electrode sheet in examples 6-8 and comparative examples 2-3 was the same as that in example 1, except for the mass fraction of the silicon material. The details were as follows in Table 2, according to the capacity per gram of graphite and silicon material and the given specific surface area value in example 1.

**Table 2 Silicon material contents of examples 6-8 and comparative examples 2-3**

| Description | Active layer | Mass fraction of silicon material | Y2/Y1 |
|---|---|---|---|
| Example 1 | First active layer | 10% | 1.14 |
| | Second active layer | 10% | |
| Example 6 | First active layer | 0% | 1.62 |
| | Second active layer | 20% | |
| Example 7 | First active layer | 5% | 1.35 |
| | Second active layer | 15% | |
| Example 8 | First active layer | 0% | 1.17 |
| | Second active layer | 0% | |
| Comparative example 2 | First active layer | 15% | 0.96 |
| | Second active layer | 5% | |
| Comparative example 3 | First active layer | 20% | 0.8 |
| | Second active layer | 0% | |

### Comparative examples 4-6

In comparative examples 4-6, the materials used for fabrication of a negative electrode sheet were as follows: graphite 1 as negative active material and the first graphite in example 1 were the same material, and silicon material 1 and the first silicon material in example 1 were the same material; and graphite 2 as negative active material and the second graphite in example 1 were the same material, and silicon material 2 and the second silicon material in example 1 were the same material.

### Comparative example 4

Fabrication of a negative electrode slurry: the graphite 1 as negative active material, the silicon material 1, conductive carbon black, carboxymethyl cellulose (CMC) and styrene butadiene rubber (SBR) as adhesive and deionized water were added to a mixer at a certain mass ratio according to certain steps, subjected to mixing and stirring, and dispersed uniformly, to obtain the negative electrode slurry to be coated, where, the graphite 1 accounted for 90% of the total of the graphite 1 and the silicon material 1 by mass, the silicon material 1 accounted for 10% of the total of the graphite 1 and the silicon material 1 by mass, and the silicon material was SiO.

The obtained negative electrode slurry was uniformly coated on a copper foil current collector with a thickness of 8 µm, and after the coating was finished, the coated copper foil current collector was subjected to drying treatment to obtain the negative electrode sheet to be rolled.

The fabrication of the positive electrode sheet and of the finished battery was the same as that in example 1.

### Comparative example 5

Fabrication of a negative electrode slurry: the graphite 1 as negative electrode active material, the silicon material 2, conductive carbon black, carboxymethyl cellulose (CMC) and styrene butadiene rubber (SBR) as adhesive and deionized water were added to a mixer at a certain mass ratio according to certain steps, subjected to mixing and stirring, and dispersed uniformly, to obtain the negative electrode slurry to be coated, where, the graphite 1 accounted for 90% of the total of the graphite 1 and the silicon material 2 by mass, and the silicon material 2 accounted for 10% of the total of the graphite 1 and the silicon material 2 by mass.

The obtained negative electrode slurry was uniformly coated on a copper foil current collector with a thickness of 8 µm, and after the coating was finished, the coated copper foil current collector was subjected to drying treatment to obtain the negative electrode sheet to be rolled.

The fabrication of the positive electrode sheet and of the finished battery was the same as that in example 1.

### Comparative example 6

### Fabrication of negative electrode slurry

The graphite 2 as negative active material, the silicon material 1, conductive carbon black, carboxymethyl cellulose (CMC) and styrene butadiene rubber (SBR) as adhesive and deionized water were added to a mixer at a certain mass ratio according to certain steps, subjected to mixing and stirring, and dispersed uniformly, to obtain the negative electrode slurry to be coated, where, the graphite 2 accounted for 90% of the total of the graphite 2 and the silicon material 1 by mass, and the silicon material 1 accounted for 10% of the total of the graphite 2 and the silicon material 1 by mass.

The obtained negative electrode slurry was uniformly coated on a copper foil current collector with a thickness of 8 µm, and after the coating was finished, the coated copper foil current collector was subjected to drying treatment to obtain the negative electrode sheet to be rolled.

The fabrication of the positive electrode sheet and of the finished battery was the same as that in example 1.

The graphite and the silicon materials in the active layer in comparative examples 4-6 were as shown in Table 3.

**Table 3 Graphite and silicon materials in the active layers in comparative examples 4-6**

| Description | Active layer | Graphite type | Silicon material and its mass fraction |
|---|---|---|---|
| Example 1 | First active layer | Graphite 1 (BET1.4) | 10% (first silicon material) |
| | Second active layer | Graphite 2 (BET1.2) | 10% (second silicon material) |
| Comparative example 4 | Single layer | Graphite 1 (BET1.4) | 10% (first silicon material) |
| Comparative example 5 | Single layer | Graphite 1 (BET1.4) | 10% (second silicon material) |
| Comparative example 6 | Single layer | Graphite 2 (BET1.2) | 10% (first silicon material) |

Performance tests were carried out on the batteries in examples 1-8 and comparative examples 1-6.

### (1) Cycle test at 25°C

A test for 0.7C charge and 0.5C discharge cycle at 25°C was performed on the fabricated batteries.

### (2) Cycle test at 45°C

A test for 0.7C charge and 0.5C discharge cycle at 45°C was performed on the fabricated batteries.

The test results of the batteries in examples 1-8 and comparative examples 1-6 were shown in Table 4.

**Table 4 Cycle test results of examples 1-8 and comparative examples 1-6**

| Name | Cycle at 25°C 500T capacity retention rate | Cycle at 45°C 500T capacity retention rate |
|---|---|---|
| Example 1 | 83.2% | 82.5% |
| Example 2 | 84.9% | 84.8% |
| Example 3 | 84.1% | 82.9% |
| Example 4 | 84.3% | 83.7% |
| Example 5 | 82.6% | 81.9% |
| Example 6 | 83.0% | 82.2% |
| Example 7 | 84.7% | 84.2% |
| Example 8 | 84.5% | 83.9% |
| Comparative example 1 | 77.3% | 78.4% |
| Comparative example 2 | 79.1% | 79.9% |
| Comparative example 3 | 77.1% | 78.2% |
| Comparative example 4 | 77.9% | 78.5% |
| Comparative example 5 | 76.6% | 76.2% |
| Comparative example 6 | 78.3% | 78.8% |

It can be seen from Table 4, after 500 cycles at 25°C and 45°C, the capacity retention rates of the batteries in examples 1-8 were higher and the cycle performance were better when compared with those of the batteries in comparative examples 1-6.

Unless otherwise defined, the technical terms or scientific terms used in the present application should have the normal meanings understood by those with general skills in the field to which the present application belongs. The "first", "second" and similar words used in the present application do not mean any order, quantity or importance, but are only used to distinguish different components. Similar words such as "connecting" or "linking" are not limited to physical or mechanical connections, but may include electrical connections, regardless of direct or indirect. The expressions "up", "down", "left", "right", etc. are only used to indicate the relative positional relationship, and when the absolute position of the described object changes, the relative positional relationship also changes accordingly.

## Claims

1. A negative electrode sheet, **characterized by** comprising:
a current collector;
a first active layer provided on a surface of at least one side of the current collector; and
a second active layer provided on a surface of a side of the first active layer away from the current collector, the first active layer is different from the second active layer, the first active layer comprises a first active material comprising a first graphite, and the second active layer comprises a second active material comprising a second graphite;
wherein, a ratio of capacity per unit mass of the first active material to specific surface area of the first active material is a first capacity ratio, and a ratio of capacity per unit mass of the second active material to specific surface area of the second active material is a second capacity ratio, a ratio of the second capacity ratio to the first capacity ratio being greater than 1;
the first graphite has a greater specific surface area than the second graphite;
the first active material further comprises a first silicon material, and the second active material further comprises a second silicon material, the first silicon material having a specific surface area of 1.1 m²/g-4.0 m²/g, and the second silicon material having a specific surface area of 1.1 m²/g-4.0 m²/g;
the specific surface area is measured through a BET method.

2. The negative electrode sheet according to claim 1, **characterized in that** the ratio of the second capacity ratio to the first capacity ratio is in the range of 1.05-1.5.

3. The negative electrode sheet according to any one of claims 1-2, **characterized in that** a specific surface area of the first graphite is in the range of 1.0 m²/g-1.8 m²/g, and a specific surface area of the second graphite is in the range of 1.0 m²/g-1.8 m²/g.

4. The negative electrode sheet according to any one of claims 1-3, **characterized in that** the first graphite has the same capacity per gram as that of the second graphite, and the first graphite has a specific surface area different from that of the second graphite; and/or
the first active material further comprises a first silicon material, the second active material further comprises a second silicon material, the first silicon material having the same capacity per gram as that of the second silicon material, and the first silicon material having a specific surface area different from that of the second silicon material.

5. The negative electrode sheet according to any one of claims 1-4, **characterized in that** the first active material further comprises a first silicon material, the second active material further comprises a second silicon material, the first silicon material accounting for 5%-40% of the first active material by mass, and the second silicon material accounting for 5%-40% of the second active material by mass.

6. The negative electrode sheet according to claim 5, **characterized in that** the first silicon material accounts for 5%-20% of the first active material by mass, and the second silicon material accounts for 5%-20% of the second active material by mass.

7. The negative electrode sheet according to any one of claims 1-6, **characterized in that** the first active layer comprises a first conductive agent, and the second active layer comprises a second conductive agent; and/or
the first active layer comprises a first adhesive, and the second active layer comprises a second adhesive.

8. A method of fabricating a negative electrode sheet, **characterized by** comprising:
providing a current collector;
forming, on a surface of at least one side of the current collector, a first active layer;
forming, on a surface of a side of the first active layer away from the current collector, a second active layer;
wherein the first active layer is different from the second active layer, the first active layer comprises a first active material comprising a first graphite, and the second active layer comprises a second active material comprising a second graphite; a ratio of capacity per unit mass of the first active material to specific surface area of the first active material is a first capacity ratio, and a ratio of capacity per unit mass of the second active material to specific surface area of the second active material is a second capacity ratio, a ratio of the second capacity ratio to the first capacity ratio being greater than 1;
the first graphite has a greater specific surface area than the second graphite;
the first active material further comprises a first silicon material, and the second active material further comprises a second silicon material, the first silicon material having a specific surface area of 1.1 m²/g-4.0 m²/g, and the second silicon material having a specific surface area of 1.1 m²/g-4.0 m²/g;
the specific surface area is measured through a BET method.

9. The method according to claim 8, **characterized in that** the ratio of the second capacity ratio to the first capacity ratio is in the range of 1.05-1.5.

10. The method according to any one of claims 8-9, **characterized in that** a specific surface area of the first graphite is in the range of 1.0 m²/g-1.8 m²/g, and a specific surface area of the second graphite is in the range of 1.0 m²/g-1.8 m²/g.

11. The method according to any one of claims 8-10, **characterized in that** the first graphite has the same capacity per gram as that of the second graphite, and the first graphite has a specific surface area different from that of the second graphite; and/or
the first silicon material having the same capacity per gram as that of the second silicon material, and the first silicon material having a specific surface area different from that of the second silicon material.

12. A battery, **characterized by** comprising the negative electrode sheet according to any one of claims 1-7.

## Patentansprüche

1. Negativelektrodenfolie, **dadurch gekennzeichnet, dass** sie Folgendes umfasst:
einen Stromabnehmer;
eine erste aktive Schicht, die auf einer Oberfläche von mindestens einer Seite des Stromabnehmers bereitgestellt ist; und
eine zweite aktive Schicht, die auf einer Oberfläche einer Seite der ersten aktiven Schicht von dem Stromabnehmer weg bereitgestellt ist, wobei die erste aktive Schicht von der zweiten aktiven Schicht unterschiedlich ist, wobei die erste aktive Schicht ein erstes aktives Material umfasst, das einen ersten Graphit umfasst, und die zweite aktive Schicht ein zweites aktives Material umfasst, das einen zweiten Graphit umfasst;
wobei ein Verhältnis von Kapazität pro Masseneinheit des ersten aktiven Materials zur spezifischen Oberfläche des ersten aktiven Materials ein erstes Kapazitätsverhältnis ist und ein Verhältnis von Kapazität pro Masseneinheit des zweiten aktiven Materials zur spezifischen Oberfläche des zweiten aktiven Materials ein zweites Kapazitätsverhältnis ist, wobei ein Verhältnis des zweiten Kapazitätsverhältnisses zu dem ersten Kapazitätsverhältnis größer als 1 ist;
wobei der erste Graphit eine größere spezifische Oberfläche aufweist als der zweite Graphit;
wobei das erste aktive Material weiter ein erstes Silizium-Material umfasst und das zweite aktive Material weiter ein zweites Silizium-Material umfasst, wobei das erste Silizium-Material eine spezifische Oberfläche von 1,1 m²/g-4,0 m²/g aufweist und das zweite Silizium-Material eine spezifische Oberfläche von 1,1 m²/g-4,0 m²/g aufweist;
wobei die spezifische Oberfläche durch eine BET-Methode gemessen wurde.

2. Negativelektrodenfolie nach Anspruch 1, **dadurch gekennzeichnet, dass** das Verhältnis des zweiten Kapazitätsverhältnisses zu dem ersten Kapazitätsverhältnis im Bereich von 1,05-1,5 liegt.

3. Negativelektrodenfolie nach einem der Ansprüche 1-2, **dadurch gekennzeichnet, dass** eine spezifische Oberfläche des ersten Graphits im Bereich von 1,0 m²/g-1,8 m²/g liegt und eine spezifische Oberfläche des zweiten Graphits im Bereich von 1,0 m²/g-1,8 m²/g liegt.

4. Negativelektrodenfolie nach einem der Ansprüche 1-3, **dadurch gekennzeichnet, dass** der erste Graphit die gleiche Kapazität pro Gramm aufweist wie der zweite Graphit, und dass der erste Graphit eine unterschiedliche spezifische Oberfläche von der des zweiten Graphits aufweist; und/oder
dass das erste aktive Material weiter ein erstes Silizium-Material umfasst, das zweite aktive Material weiter ein zweites Silizium-Material umfasst, wobei das erste Silizium-Material die gleiche Kapazität pro Gramm wie das zweite Silizium-Material aufweist und das erste Silizium-Material eine unterschiedliche spezifische Oberfläche von der des zweiten Silizium-Materials aufweist.

5. Negativelektrodenfolie nach einem der Ansprüche 1-4, **dadurch gekennzeichnet, dass** das erste aktive Material weiter ein erstes Silizium-Material umfasst, das zweite aktive Material weiter ein zweites Silizium-Material umfasst, wobei das erste Silizium-Material 5-40 % des ersten aktiven Materials nach Masse ausmacht und das zweite Silizium-Material 5-40 % des zweiten aktiven Materials nach Masse ausmacht.

6. Negativelektrodenfolie nach Anspruch 5, **dadurch gekennzeichnet, dass** das erste Silizium-Material 5-20 % des ersten aktiven Materials nach Masse ausmacht und das zweite Silizium-Material 5-20 % des zweiten aktiven Materials nach Masse ausmacht.

7. Negativelektrodenfolie nach einem der Ansprüche 1-6, **dadurch gekennzeichnet, dass** die erste aktive Schicht ein erstes leitfähiges Mittel umfasst und die zweite aktive Schicht ein zweites leitfähiges Mittel umfasst; und/oder
die erste aktive Schicht einen ersten Klebstoff umfasst und die zweite aktive Schicht einen zweiten Klebstoff umfasst.

8. Verfahren zur Herstellung einer Negativelektrodenfolie, **dadurch gekennzeichnet, dass** es Folgendes umfasst: Bereitstellen eines Stromabnehmers;
Bilden einer ersten aktiven Schicht auf einer Oberfläche mindestens einer Seite des Stromabnehmers;
Bilden einer zweiten aktiven Schicht auf einer Oberfläche einer Seite der ersten aktiven Schicht, von dem Stromabnehmer weg;
wobei die erste aktive Schicht von der zweiten aktiven Schicht unterschiedlich ist, wobei die erste aktive Schicht ein erstes aktives Material umfasst, das einen ersten Graphit umfasst, und die zweite aktive Schicht ein zweites aktives Material umfasst, das einen zweiten Graphit umfasst;
wobei ein Verhältnis von Kapazität pro Masseneinheit des ersten aktiven Materials zur spezifischen Oberfläche des ersten aktiven Materials ein erstes Kapazitätsverhältnis ist und ein Verhältnis von Kapazität pro Masseneinheit des zweiten aktiven Materials zur spezifischen Oberfläche des zweiten aktiven Materials ein zweites Kapazitätsverhältnis ist ein Verhältnis des zweiten Kapazitätsverhältnisses zu dem ersten Kapazitätsverhältnis größer als 1 ist;
wobei der erste Graphit eine größere spezifische Oberfläche aufweist als der zweite Graphit;
wobei das erste aktive Material weiter ein erstes Silizium-Material umfasst und das zweite aktive Material weiter ein zweites Silizium-Material umfasst, wobei das erste Silizium-Material eine spezifische Oberfläche von 1,1 m²/g-4,0 m²/g aufweist und das zweite Silizium-Material eine spezifische Oberfläche von 1,1 m²/g-4,0 m²/g aufweist;
wobei die spezifische Oberfläche durch eine BET-Methode gemessen wurde.

9. Verfahren nach Anspruch 8, **dadurch gekennzeichnet, dass** das Verhältnis des zweiten Kapazitätsverhältnisses zu dem ersten Kapazitätsverhältnis im Bereich von 1,05-1,5 liegt.

10. Verfahren nach einem der Ansprüche 8-9, **dadurch gekennzeichnet, dass** eine spezifische Oberfläche des ersten Graphits im Bereich von 1,0 m²/g-1,8 m²/g liegt und eine spezifische Oberfläche des zweiten Graphits im Bereich von 1,0 m²/g-1,8 m²/g liegt.

11. Verfahren nach einem der Ansprüche 8-10, **dadurch gekennzeichnet, dass** das erste Graphit die gleiche Kapazität pro Gramm aufweist wie der zweite Graphit, und dass der erste Graphit eine unterschiedliche spezifische Oberfläche von der des zweiten Graphits aufweist; und/oder
das erste Silizium-Material die gleiche Kapazität pro Gramm wie die des zweiten Silizium-Materials aufweist und das erste Silizium-Material eine spezifische Oberfläche aufweist, der von der des zweiten Silizium-Materials unterschiedlich ist.

12. Batterie, **dadurch gekennzeichnet, dass** sie die Negativelektrodenfolie nach einem der Ansprüche 1-7 umfasst.

## Revendications

1. Feuille d'électrode négative, **caractérisée en ce qu'**elle comprend :
un collecteur de courant ;
une première couche active prévue sur une surface d'au moins un côté du collecteur de courant ; et
une seconde couche active prévue sur une surface d'un côté de la première couche active à distance du collecteur de courant, la première couche active est différente de la seconde couche active, la première couche active comprend un premier matériau actif comprenant un premier graphite et la seconde couche active comprend un second matériau actif comprenant un second graphite ;
dans lequel, un rapport entre une capacité par unité de masse du premier matériau actif et une surface spécifique du premier matériau actif est un premier rapport de capacité et un rapport entre une capacité par unité de masse du second matériau actif et une surface spécifique du second matériau actif est un second rapport de capacité, un rapport entre le second rapport de capacité et le premier rapport de capacité étant supérieur à 1 ;
le premier graphite présente une surface spécifique supérieure au second graphite ;
le premier matériau actif comprend en outre un premier matériau en silicium et le second matériau actif comprend en outre un second matériau en silicium, le premier matériau en silicium présentant une surface spécifique de 1,1 m²/g-4,0 m²/g et le second matériau en silicium présentant une surface spécifique de 1,1 m²/g-4,0 m²/g ;
la surface spécifique est mesurée par un procédé BET.

2. Feuille d'électrode négative selon la revendication 1, **caractérisée en ce que** le rapport entre le second rapport de capacité et le premier rapport de capacité se situe dans la plage de 1,05 à 1,5.

3. Feuille d'électrode négative selon l'une quelconque des revendications 1 et 2, **caractérisée en ce qu'**une surface spécifique du premier graphite se situe dans la plage de 1,0 m²/g-1,8 m²/g et une surface spécifique du second graphite se situe dans la plage de 1,0 m²/g-1,8 m²/g.

4. Feuille d'électrode négative selon l'une quelconque des revendications 1 à 3, **caractérisée en ce que** le premier graphite présente la même capacité par gramme que celle du second graphite et le premier graphite présente une surface spécifique différente de celle du second graphite ; et/ou
le premier matériau actif comprend en outre un premier matériau en silicium, le second matériau actif comprend en outre un second matériau en silicium, le premier matériau en silicium présentant la même capacité par gramme que celle du second matériau en silicium et le premier matériau en silicium présentant une surface spécifique différente de celle du second matériau en silicium.

5. Feuille d'électrode négative selon l'une quelconque des revendications 1 à 4, **caractérisée en ce que** le premier matériau actif comprend en outre un premier matériau en silicium, le second matériau actif comprend en outre un second matériau en silicium, le premier matériau en silicium représentant 5 % à 40 % du premier matériau actif en masse et le second matériau en silicium représentant 5 % à 40 % du second matériau actif en masse.

6. Feuille d'électrode négative selon la revendication 5, **caractérisée en ce que** le premier matériau en silicium représente 5 % à 20 % du premier matériau actif en masse et le second matériau en silicium représente 5 % à 20 % du second matériau actif en masse.

7. Feuille d'électrode négative selon l'une quelconque des revendications 1 à 6, **caractérisée en ce que** la première couche active comprend un premier agent conducteur et la seconde couche active comprend un second agent conducteur ; et/ou
la première couche active comprend un premier adhésif et la seconde couche active comprend un second adhésif.

8. Procédé de fabrication d'une feuille d'électrode négative, **caractérisé en ce qu'**il comprend :
la fourniture d'un collecteur de courant ;
la formation, sur une surface d'au moins un côté du collecteur de courant, d'une première couche active ;
la formation, sur une surface d'un côté de la première couche active à distance du collecteur de courant, d'une seconde couche active ;
dans lequel la première couche active est différente de la seconde couche active, la première couche active comprend un premier matériau actif comprenant un premier graphite et la seconde couche active comprend un second matériau actif comprenant un second graphite ; un rapport entre une capacité par unité de masse du premier matériau actif et une surface spécifique du premier matériau actif est un premier rapport de capacité et un rapport entre une capacité par unité de masse du second matériau actif et une surface spécifique du second matériau actif est un second rapport de capacité, un rapport entre le second rapport de capacité et le premier rapport de capacité étant supérieur à 1 ;
le premier graphite présente une surface spécifique supérieure au second graphite ;
le premier matériau actif comprend en outre un premier matériau en silicium et le second matériau actif comprend en outre un second matériau en silicium, le premier matériau en silicium présentant une surface spécifique de 1,1 m²/g-4,0 m²/g et le second matériau en silicium présentant une surface spécifique de 1,1 m²/g-4,0 m²/g ;
la surface spécifique est mesurée par un procédé BET.

9. Procédé selon la revendication 8, **caractérisé en ce que** le rapport entre le second rapport de capacité et le premier rapport de capacité se situe dans la plage de 1,05 à 1,5.

10. Procédé selon l'une quelconque des revendications 8 et 9, **caractérisé en ce qu'**une surface spécifique du premier graphite se situe dans la plage de 1,0 m²/g-1,8 m²/g et une surface spécifique du second graphite se situe dans la plage de 1,0 m²/g-1,8 m²/g.

11. Procédé selon l'une quelconque des revendications 8 à 10, **caractérisé en ce que** le premier graphite présente la même capacité par gramme que celle du second graphite et le premier graphite présente une surface spécifique différente de celle du second graphite ; et/ou
le premier matériau en silicium présentant la même capacité par gramme que celle du second matériau en silicium et le premier matériau en silicium présentant une surface spécifique différente de celle du second matériau en silicium.

12. Batterie, **caractérisée en ce qu'**elle comprend la feuille d'électrode négative selon l'une quelconque des revendications 1 à 7.
